# EUROPEAN PATENT SPECIFICATION

(11) **EP 2 260 211 B1**
(45) Date of publication and mention of the grant of the patent: **19.12.2012**
(21) Application number: 09716384.4
(22) Date of filing: 09.03.2009
(51) Int. Cl.: F16B 23/00

(54) **FRICTION LOCK BOLT**
REIBUNGSSPERRBOLZEN
BOULON À SERRAGE PAR FRICTION

(30) Priority: 07.03.2008 US 34822
(43) Date of publication of application: 15.12.2010
(73) Proprietor: Unirac, Inc., Albuquerque, NM 87102 (US)
(72) Inventor: SEKRETA, Roy, J., Albuquerque NM 87123 (US)
(74) Representative: Söllner, Oliver
(86) International application number: PCT/US2009/036565
(87) International publication number: WO 2009/111796

(56) References cited:
- SU-A1- 614 254
- US-B1- 6 520 704

## Description

### FIELD OF TECHNOLOGY

Exemplary embodiments of the invention generally relate to a fastener, such as a bolt, and methods of using the bolt. In a non-limiting implementation, the bolts are used in systems to securely mount a panel to a rail.

### BACKGROUND OF EXEMPLARY EMBODIMENTS OF THE INVENTION

Fasteners, such as bolts, are used to secure two objects together. In one example, a bolt may be used to mount a panel to a support structure, such as mounting a solar panel onto a rail. In such cases, the rail may be, in turn, mounted to a secure surface, such as roof footings, footing grids, roofs, poles, frames, surfaces, or other objects.

Over time, the bolt may loosen, particularly when it is exposed to varying forces induced or caused by wind, snow, rain, and other elements of weather. The loose bolt is problematic because the panel may no longer be securely held to the rail or support structure.

Furthermore, the current design of the bolts tends to allow the bolts to fall out, slip or move when inserted into a slot of a rail for the purpose of securing a panel or other device. As such, an installer may need to use both hands to steadily position a bolt after placing the bolt in the slot and before placing the panel on the rail and securing the assembly by tightening a nut around the bolt. This is due, in part, because there is no compressing force between the interior surfaces of the slot and the head of the bolt to initially hold the bolt in place. Accordingly, the bolts complicate the installation of the panels and other devices and make the installation more time consuming.

As the use of solar panels to generate all or part of the electrical needs for home and industry increases, demand has escalated for a solar panel mounting system that not only is structurally rigid, weather resistant, and easy to install, but also is easy to maintain and is structurally secure for an extended period of time. Therefore, a new and useful bolt that is capable of easily and securely mounting solar panels onto a rail is needed.

### SUMMARY OF EXEMPLARY EMBODIMENTS OF THE INVENTION

An object of an illustrative, non-limiting embodiment of the present invention is to overcome the above and other problems and disadvantages associated with the current design of bolts and other fasteners. Also, the present invention is not required to overcome the disadvantages described above, and exemplary embodiments of the present invention may overcome other disadvantages or may not overcome any disadvantages.

In one embodiment, the present invention relates to a bolt that facilitates a more secure and easy mounting of a panel onto a support structure. In this embodiment, an elastomeric element is provided on a head of the bolt so that the elastomeric element is compressed against an opposing surface of the support structure during an assembly or installation process. The support structure has upper and lower portions that define a slot that can accept the head of the bolt. The bolt is inverted and inserted into the slot so that the elastomeric element compresses against the lower portion of the support structure and presses the head of the bolt against the upper portion. This results in creating friction between the bolt, which holds the bolt steady during assembly or installation and prevents the bolt from loosening after the panel is mounted.

In one example, after securing the bolt to the support structure at a desirable location on the structure, the panel may be mounted onto the support structure. A clamp is placed over at least a portion of the panel and the bolt so that the bolt extends through the clamp. A flange nut may be used to tighten the clamp down towards the support structure and secure the panel.

In another embodiment, the bolt has a dog-point on the end of the bolt to facilitate placement of a nut on the bolt.

In some embodiments, the bolt includes a head with a spring that compresses during installation of the bolt.

In still another embodiment, the bolt includes a mechanism that prevents the bolt from turning in a direction, which loosens the bolt, after installation.

Embodiments of the invention also provide a method of installing a solar panel onto a rail. In one implementation, the bolt engages the panel and the rail and secures the panel to the rail.

Other embodiments may relate to a nut or other fastener having the same elastomeric spring material to create the same functionality.

While several embodiments of the bolt and nut are explained in connection with securing a solar panel to a rail, they may be used in other applications where an opposing surface would compress the elastomeric element and provide for a more secure and easy installation process.

### BRIEF DESCRIPTION OF THE DRAWINGS

The above and other objects and advantages of illustrative, non-limiting embodiments of the present invention will become more apparent by describing them in detail with reference to the attached drawings in which:
Figure 1 shows a perspective view of an embodiment of a bolt.
Figure 2 shows a cross-sectional view of the bolt of Figure 1 in an embodiment of a support structure.
Figures 3A to 3C, respectively, show a bottom, side, and top views of an embodiment of the bolt.
Figures 4A to 4D, respectively, show two side views, a top view, and a bottom view of another embodiment of the bolt.
Figures 5A to 5C, respectively, show top, side, and bottom views of a further embodiment of the bolt.
Figures 6A to 6C, respectively, show top and two side views of yet another embodiment of the bolt.
Figures 7A and 7B, respectively, show side views of still another embodiment of the bolt.
Figure 8 shows a perspective view of another embodiment of the bolt.
Figure 9 shows a perspective view of an embodiment of the solar panel clamping system.

### DETAILED DESCRIPTION OF EXEMPLARY EMBODIMENTS

The following description of the illustrative, non-limiting embodiments discloses specific dimensions, configurations, components, and processes. However, the embodiments are merely examples of the present invention, and thus, the specific features described below are merely used to more easily describe such embodiments and to provide an overall understanding of the present invention. Accordingly, one skilled in the art will readily recognize that the present invention is not limited to the specific embodiments described below. Furthermore, the descriptions of various dimensions, configurations, components, and processes of the embodiments that would have been known to one skilled in the art are omitted for the sake of clarity and brevity.

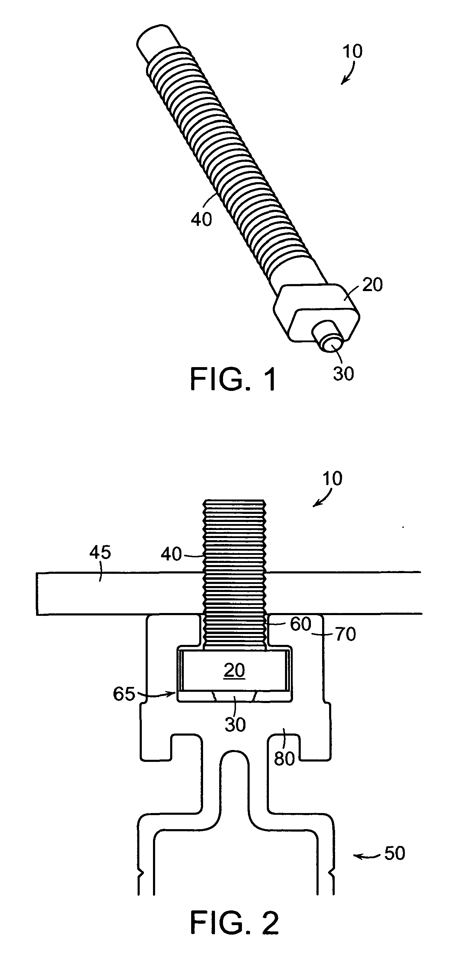

Figure 1 shows one embodiment of a fastener (e.g., a bolt) 10 that has a head 20 with an elastomeric element 30. The head 20 of the bolt 10 is located on top of an elongated fastener 40 that engages another device (e.g., a nut) to perform a fastening operation. In Figure 1, the fastener 40 is threaded to accept the nut so that twisting the nut in a certain direction (e.g., a clockwise direction) moves the nut from a distal end of the fastener 40 towards the head 20.

As described in the more detailed examples below, when the elastomeric element 30 is compressed against a surface of a support structure, friction is created between the element 30 and the surface due to, in part, the resiliency of the element 30. The compressed elastomeric element 30 may also urge the head 20 of the bolt 10 against one or more other surfaces of the support structure to increase the friction. As a result of the friction, the bolt 10 may be securely held in position during an installation or assembly process. Also, the friction may prevent the bolt 10 from turning and loosening after assembly to keep the assembly more structurally secure.

Figure 2 shows an example of a top mounting clamping system that is used to position and hold a panel 45 firmly against a support structure 50. As shown in the embodiment, the support structure 50 includes a space 65 adapted to accept the head 20 of the bolt 10 and hold the bolt 10 in an inverted position. The support structure 50 includes an upper portion 70 and a lower portion 80 that hold the head 20 of the bolt 10 within the space 65 between the portions 70 and 80, and the fastener 40 of the bolt 10 projects from the support structure 50 through an opening (e.g., slot 60) in the upper portion 70. After placing a panel 45 on the support structure 50 such that the fastener 40 projects through a hole in the panel 45, a nut (not shown) may be tightened around fastener 40 of the bolt 10 and secure the panel 45 onto the support structure 50.

When the head 20 of the bolt 10 is located in the space 65, it contacts the upper portion 70 of the structure 50, and the elastomeric element 30 contacts the lower portion 80 of the structure 50. Since the elastomeric element 30 is compressed in the space 65, it exerts pressure against the lower portion 80 and pushes the head 20 against the upper portion 70. As such, there is friction between (1) the head 20 and the element 30 and (2) the support structure 50, which prevents the bolt 10 from rotating within the structure 50 and loosening the connection between the panel 45 and the structure 50.

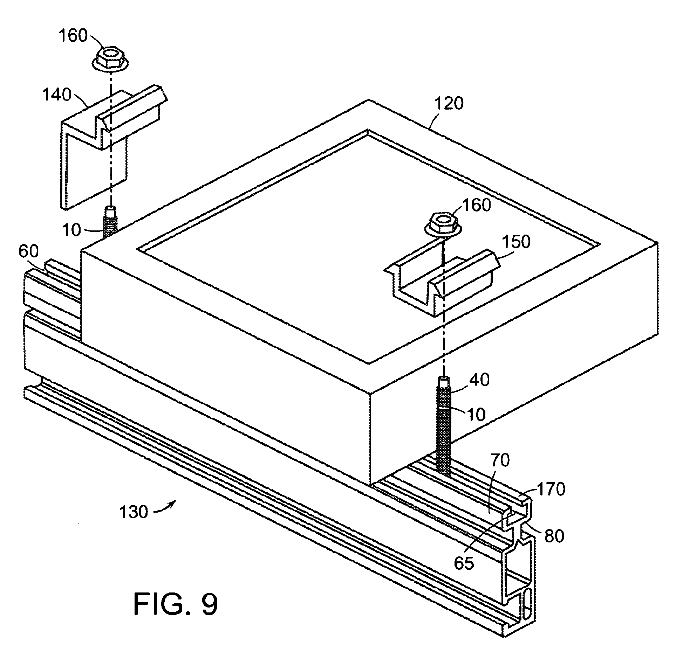

Figure 9 shows an example of a solar panel clamping system that uses the bolt 10 described above. In the system, the bolt 10 secures a solar panel 120 onto a support structure 50 (e.g., a solarmount rail 130). The rail 130 is elongated and has upper opposing jaws 170, which form an upper portion 70 and a lower portion 80 that form the contours of a slot 60. Also, as described above, a space 65 is formed between the upper and lower portions 70 and 80.

To secure the panel 120 to the rail 130, the bolt 10 is inverted, the head 20 of the bolt 10 is inserted in the space 65, and the fastener 40 protrudes through the slot 60. Specifically, the bolt 10 is positioned in the rail 130 by inserting the head 20 at the end of the rail 130 and sliding the bolt 10 along the slot 60 of the rail 130 to the desired position while the head 20 is in the space 65. Since the compressed element 30 creates friction between the bolt 10 and the rail 130, the bolt 10 remains in the desired position during the installation process, even prior to securing the panel 120 to the assembly.

After inserting the bolt 10 into the space 65 and moving it to the desired position, an end clamp 140 or a mid-point clamp 150 may be placed on top of the bolt 10 so that at least one portion of the clamp 140 or 150 covers the solar panel 120. This clamp system may be made from aluminum, or from other metallic or non metallic materials. A flange nut 160 may engage the bolt 10 and secure the solar panel 120 to the solarmount rail 130 via the clamp 140 or 150. Also, the clamp 140 or 150 may be omitted from the system, and the bolt 10 and nut 160 may directly secure the solar panel 120 to the rail 130. Of course, the system is not limited to securing solar panels 120 to rails 130 and other types of panels or devices may be secured to other types of rails or support surfaces.

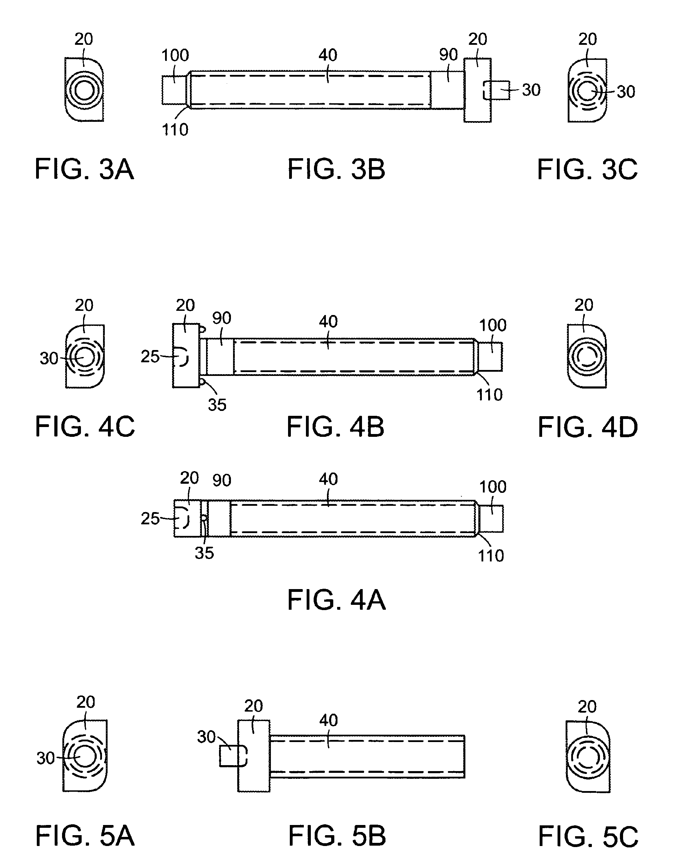

Figures 3A to 3C provide different views of the bolt 10 shown in Figure 1. In a non-limiting example, the head 20 of the bolt 10 has a maximum width that is larger than the width of the elongated fastener 40. As shown, the head 20 has a generally rectangular shape in which two opposite angles are rounded. In other embodiments, the head 20 can be shaped like a square, rectangle, circle, ellipse, octagon, a parallelogram, or any other shape that provides for a width larger than the width of the elongated fastener 40. Furthermore, while the head 20 in Figures 3A to 3C has a flat upper portion, it may also have a dome shape or another appropriate shape depending on the environment in which the bolt 10 is used. The size of the head 20 is sufficient to insert it and the elastomeric element 30 in its compressed form in the space 65 between the upper and lower portion 70 and 80 of the support structure 50.

Also, in the embodiment illustrated in Figures 4A to 4D, the elastomeric element 30 is separate from the head 20. As such, the head 20 has an indented surface, groove or hole 25, which accepts the elastomeric element 30.

Figure 4A is a side view of one example of the bolt 10 in which the shorter width of the generally rectangular head 20 is shown in relation to the width of the fastener 40. In the embodiment, the shorter width of the head 20 is substantially identical to the width of the fastener 40. Figure 4B is another view which shows the longer width of the head 20 in relation to the width of the fastener 40. As illustrated, this width is larger than the width of the fastener 40.

As discussed above, the elongated fastener 40 extends from the head 20 to engage a nut. Figures 3A and 4D show that the elongated fastener 40 has a generally cylindrical shape and contains threads along the outer surface of the cylindrical shape to engage a nut. In other embodiments, the elongated fastener 40 may have different shapes to operate with locking mechanisms other than a nut. While the size and shape of the elongated fastener 40 may depend on the size and shape of the panel or other item to be secured or the application in which the bolt is used, in one example, the elongated fastener 40 may have a length of about 1 inch to about 3 inches and a width 1/8 inch to about 1 inch. When threaded, the elongated fastener 40 optionally includes a "non-threaded" shoulder 90 above the threads as best shown in Figures 3B, 4A, and 4B.

Depending on the embodiment and the implementation, the elongated fastener 40 and the head 20 may be made from metallic or non-metallic material. In one example, the head 20 and the elongated fastener 40 are made from stainless steel.

In one implementation, the elastomeric element 30 compresses when the bolt 10, for example, is inserted between the upper and lower portion 70 and 80 of a support structure 50. As noted above, when the elastomeric element 30 is compressed, it pushes the head 20 against the upper portion 70 of the support structure 50 and, due to its resiliency, directly presses against the lower portion 80 of the support structure 50. In one example, the elastomeric element 30 is made of rubber, but in other embodiments, it may be made of other materials. For instance, it could be made from various thermoplastics which exhibit a rubber-like behavior, like Santoprene™.

In some embodiments, the elastomeric element 30 holds the position of the bolt 10 relative to the support structure 50 due to the frictional force between the compressed elastomeric element 30 and the lower portion 80. For example, after the head 20 of the bolt 10 is inserted in the space 65, the elastomeric element 30 expands and exerts pressure on the head 20 of the bolt 10 and pushes it against the opposite side of the space 65 to provide sufficient friction to prevent the head 20 (and thus the bolt 10) from falling out of the space 65. In one implementation, an elastomeric element 30 having a coefficient of friction of at least about 1 (and preferably between about 1 to about 4) in its uncompressed form can create sufficient friction to prevent the bolt 10 from falling out of the space 65.

In one example, the size of the elastomeric element 30 should be large enough so that it is compressed when the head 20 of the bolt 10 is inserted between the upper and lower portions 70 and 80 of the support structure 50. In this instance, the height of the elastomeric element 30 should be sufficient to push the head 20, with enough force, against the upper portion 70 of the support structure 50 and to exert enough pressure on the lower portion 80 of the structure 50. Depending on the size of the space 65, such a height may be about 0.1 inch to about 0.4 inches. Also, the element 30 may take various shapes, such as a cylinder, a box, a pyramid, cone, a truncated pyramid, or a truncated cone. The examples in Figures 3A to 4D and other figures show that the elastomeric element 30 has a generally cylindrical shape in which the longitudinal axis of the element 30 aligns with the longitudinal axis of the cylindrical fastener 40. However, the element 30 clearly is not limited to such a shape and orientation, and after reading the present specification, one skilled in the art would know how to adjust the size, shape, and orientation of the element 30 in light of the particular application.

As shown in Figures 3A, 4A, and 4B, the bolt 10 may include a dog point 100. The dog point 100 is an unthreaded elongated tip that has a width less than the diameter of fastener 40. The dog-point 100 aligns and positions, for example, a nut with respect to the threads of the fastener 40 allowing the installer to place the nut on the bolt 10 before the nut initially engages the threads of fastener 40. In one implementation, the dog-point 100 is made from metallic or non-metallic material, such as stainless steel. In a further example, the dog point 100 may include a chamfer 110 to connect the dog point 100 to the fastener 40, and the chamfer 110 may be angled at about 45° to allow an easy transition for the nut onto the threaded portion of the fastener 40.

In other embodiments, the bolt 10 also includes one or more devices for preventing the bolt 10 from turning in a direction (e.g., counter-clockwise) in which it loosens its connection with the nut. For example, as shown in Figures 4A and 4B, the bolt 10 may include nibs 35 to prevent it from turning counter-clockwise. The nibs 35 may be provided on the surface of the head 20 opposite to the surface on which the elastomeric element 30 is present. Although Figures 4A and 4B show the nibs 35 at the circumferential end of head 20, other embodiments of the bolt 10 may have the nibs 35 off-set towards the center of the bolt 10. Moreover, the nibs 35 may additionally or alternatively be placed on the surface of the head 20 where element 30 is present or on the side surfaces of the head 20. In some of the embodiments that include nibs 35, the elongated fastener 40 may include threads that would tighten the bolt 10 when turned in a clockwise direction.

Table 1 below includes examples of specific dimensions of the embodiments of the bolts 10 illustrated in Figures 3A to 4D.

**Table 1**

| Figure 3 | Dimension |
|---|---|
| Length of head 20 | about 0.435 inches |
| Width of head 20 | about 0.25 inches |
| Length of fastener 40 (including shoulder 90 and dog point 100) | about 2 inches |
| Length of dog point 100 | about 0.186 inches |
| Length of threaded portion of fastener 40 | about 1.590 inches |
| Height of head 20 | about 0.165 inches |
| Height of exposed portion of elastomeric | about 0.125 inches |
| element 30 | |

Figures 5A to 5C shows another embodiment of the bolt 10 in which the head 20 also possesses the generally rectangular shape with rounded opposing angles. The bolt 10 in this example does not include a dog-point 110. Table 2 below includes examples of specific dimensions of the bolt 10 illustrated in Figures 5A to 5C.

**Table 2**

| Figure 5 | Dimension |
|---|---|
| Length of head 20 | about 0.435 inches |
| Width of head 20 | about 0.25 inches |
| Height of head 20 | about 0.165 inches |
| Length of fastener 40 | about 1.125 inches |
| Length of dog point 100 | about 0.186 inches |
| Height of exposed portion of elastomeric element 30 | about 0.125 inches |

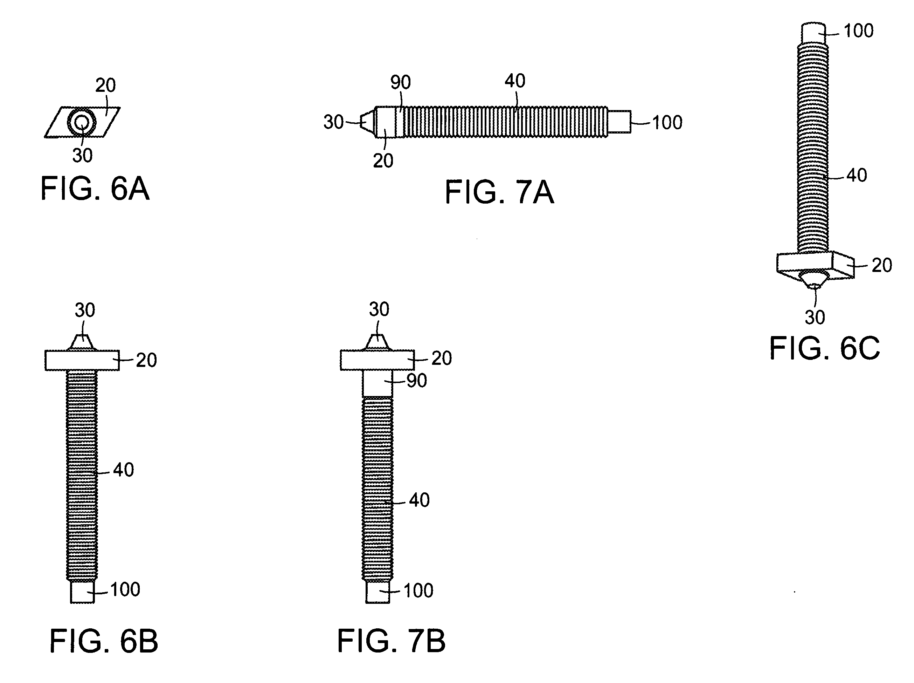

Figures 6A to 6C illustrate yet a further embodiment of the bolt 10 in which the head 20 has a shape of a parallelogram and in which the elastomeric element 30 has the shape of a truncated cone. As shown in Figures 6B to 6C, the fastener 40 of the bolt 10 is threaded up to the head. Figures 7A and 7B show another example of the bolt 10 having a "non-threaded" shoulder 90 above the threaded portion of the fastener 40. Table 3 below includes examples of specific dimensions of the bolts 10 illustrated in Figures 6A to 7B.

**Table 3**

| Figure 6 | Dimension |
|---|---|
| Length of one side of head 20 | about 0.503 inches |
| Width of head 20 | about 0.25 inches |
| Length of fastener 40 (including shoulder 90 and dog point 100) | about 2 inches |
| Diameter of dog point 100 | about 0.186 inches |
| Length of dog point 100 | about 0.186 inches |
| Length of threaded portion of fastener 40 | about 1.590 inches |
| Height of head 20 | about 0.165 inches |
| Height of exposed portion of elastomeric element 30 | about 0.125 inches |
| Diameter of elastomeric element 30 at its base | about 0.197 inches |
| Diameter of elastomeric element at its upper portion | about 0.118 inches |
| Degree of chamfer 110 | 45° |

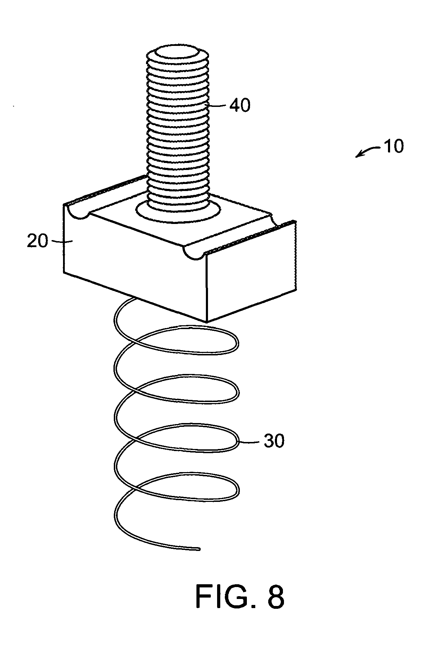

Figure 8 shows another embodiment of the bolt 10. In this example, the elastomeric element 30 comprises a spring that presses the head 20 against the upper portion 70 of a support structure 50 and that presses against a lower portion 80 of the support structure 50, as described above.

While the various embodiments above contain different components and features, upon reading the specification, one skilled in the art readily will realize that such components and features in one embodiment may be incorporated into or combined with components and features of another embodiment. Also, the previous description of the embodiments is provided to enable a person skilled in the art to make and use the present invention. Moreover, various modifications to these embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by the limitations of the claims.

## Claims

1. A fastening device comprising:
an elongated fastener,
a head coupled to an end of the elongated fastener, **characterised by**
an elastomeric element coupled to a surface of the head substantially opposite to the elongated fastener.

2. The fastening device of claim 1, wherein a horizontal cross-section of the head has:
a generally rectangular shape in which two opposite angles are rounded; or
a shape of a square, rectangle, circle, ellipse, octagon, or parallelogram.

3. The fastening device of claim 1, wherein the elastomeric element is a spring or includes rubber.

4. The fastening device of claim 1, wherein:
the elastomeric element is adapted to create sufficient friction against an opposing surface to inhibiting the fastening device from sliding along the opposing surface; and/or
the elastomeric element is arranged to have a coefficient of friction of about at least 1 against an opposing surface, when said elastomeric element is in its uncompressed form.

5. The fastening device of claim 1, wherein the elastomeric element has a longitudinal axis that aligns with a longitudinal axis of the elongated fastener.

6. The fastening device of claim 1, further comprising nibs for inhibiting the fastening device from turning in a undesired direction.

7. A method of securing a device onto a support structure, the method comprising:
providing a bolt that comprises
a elongated fastener,
a head coupled to a first end of the elongated fastener, and
an elastomeric element coupled to a surface of the head substantially opposite to the elongated fastener, and
inserting the bolt in a space of the support structure such that the elastomeric element compresses and exerts a force against a surface of the support structure.

8. The method of claim 7, wherein:
the elastomeric element provides sufficient friction to inhibit the head from falling out of the space; and/or
the elastomeric element has a coefficient of friction of about at least 1 against the surface of the support structure, when said elastomeric element is in its uncompressed form.

9. The method of claim 7, further comprising:
placing a panel on the support structure such that the fastening device projects through a hole in the panel, and
tightening a nut around the fastening device to secure the panel onto the support structure.

10. The method of claim 7, further comprising:
placing a panel on the support structure,
placing a clamp on top of the bolt so that at least one portion of the clamp covers the panel, and
tightening a nut around the fastening device to secure the panel onto the support structure.

11. The method of claim 9 or 10, wherein the panel is a solar panel.

12. The method of claim 7, wherein the support structure comprises an upper portion and a lower portion, the upper portion comprising upper opposing jaws that form the contours of a slot through which the elongated fastener can protrude, and wherein said space is between the upper portion and the lower portion.

13. The method of claim 12, wherein the support structure is a rail.

14. The method of claim 12, wherein the elastomeric element pushes the head against said upper portion and directly presses against said lower portion.

15. A top mounting clamping system, comprising:
the fastening device including an elongated fastener, a head coupled to an end of the elongated fastener, and an elastomeric element coupled to a surface of the head substantially opposite to the elongated fastener,
a panel, and
a support structure including a space adapted to accept the head of the fastening device and the elastomeric element.

## Patentansprüche

1. Befestigungsvorrichtung mit:
einem länglichen Befestiger; und
einem an einem Ende des länglichen Befestigers angebrachten Kopf, **dadurch gekennzeichnet, dass**
ein elastomeres Element an einer Oberfläche des Kopfs angebracht ist, die sich im Wesentlichen auf der vom länglichen Befestiger abgewandten Seite befindet.

2. Befestigungsvorrichtung nach Anspruch 1, wobei ein horizontaler Querschnitt des Kopfs:
eine im Allgemeinen rechteckige Form, bei der zwei gegenüberliegende Winkel abgerundet sind, oder
eine Form eines Quadrats, eines Rechtecks, eines Kreises, einer Ellipse, eines Achtecks oder eines Parallelogramms aufweist.

3. Befestigungsvorrichtung nach Anspruch 1, wobei das elastomere Element eine Feder ist oder Gummi aufweist.

4. Befestigungsvorrichtung nach Anspruch 1, wobei:
das elastomere Element angepasst ist, um ausreichend Reibung an einer gegenüberliegenden Oberfläche zu erzeugen, um das Befestigungselement daran zu hindern an der gegenüberliegenden Oberfläche entlang zu gleiten; und/oder
das elastomere Element angeordnet ist, um einen Reibungskoeffizienten von ungefähr wenigstens 1 gegenüber einer gegenüberliegenden Oberfläche aufzuweisen, wenn das elastomere Element sich in seinem unkomprimierten Zustand befindet.

5. Befestigungsvorrichtung nach Anspruch 1, wobei das elastomere Element eine Längsachse aufweist, die mit einer Längsachse des länglichen Befestigers ausgerichtet ist.

6. Befestigungselement nach Anspruch 1, ferner mit Nasen oder Stiften, die zum Verhindern einer Drehung der Befestigungsvorrichtung in einer ungewünschten Richtung dienen.

7. Verfahren zum Sichern einer Vorrichtung auf einer Trägerstruktur, das Verfahren umfasst:
Bereitstellen eines Bolzens mit:
einem länglichen Befestiger;
einem an dem länglichen Befestiger angebrachten Kopf; und
einem an einer Oberfläche des Kopfs angebrachten elastomeren Element, wobei die Oberfläche sich im Wesentlichen auf der vom länglichen Befestiger abgewandten Seite befindet; und
Einsetzen des Bolzens in einen Raum der Trägerstruktur, so dass das elastomere Element zusammengedrückt wird und eine Kraft gegen eine Oberfläche der Trägerstruktur ausübt.

8. Verfahren nach Anspruch 7, wobei:
das elastomere Element ausreichend Reibung bereitstellt, um den Kopf an einem Herausfallen aus dem Raum zu hindern; und/oder
das elastomere Element einen Reibungskoeffizienten von ungefähr mindestens 1 gegenüber der Oberfläche der Trägerstruktur aufweist, wenn sich das elastomere Element in seinem unkomprimierten Zustand befindet.

9. Verfahren nach Anspruch 7, ferner mit:
Setzen eines Panels auf die Trägerstruktur, so dass die Befestigungsvorrichtung sich durch ein Loch im Panel erstreckt; und
Festziehen einer Mutter an der Befestigungsvorrichtung, um das Panel auf der Trägerstruktur zu sichern.

10. Verfahren nach Anspruch 7, ferner mit:
Setzen eines Panels auf die Trägerstruktur;
Setzen einer Klemme auf das Oberteil des Bolzens, so dass zumindest ein Bereich der Klemme das Panel bedeckt; und
Festziehen einer Mutter an der Befestigungsvorrichtung, um das Panel auf der Trägerstruktur zu sichern.

11. Das Verfahren nach Anspruch 9 oder 10, wobei das Panel ein Solarpanel ist.

12. Verfahren nach Anspruch 7, wobei die Trägerstruktur einen oberen Bereich und einen unteren Bereich aufweist, der obere Bereich obere gegenüberliegende Klauen aufweist, die den Umriss eines Schlitzes ausbilden, durch den der längliche Befestiger überstehen kann, und wobei der Raum sich zwischen dem oberen Bereich und dem unteren Bereich befindet.

13. Verfahren nach Anspruch 12, wobei die Trägerstruktur eine Schiene ist.

14. Verfahren nach Anspruch 12, wobei das elastomere Element den Kopf gegen den oberen Bereich und unmittelbar gegen den unteren Bereich drückt.

15. Von oben zu montierendes Klemmsystem mit:
einer Befestigungsvorrichtung mit einem länglichen Befestiger, einem an einem Ende des länglichen Befestigers angebrachter Kopf, und einem an einer Oberfläche des Kopfs angebrachten elastomeren Element, wobei die Oberfläche sich im Wesentlichen auf der vom länglichen Befestiger abgewandten Seite befindet;
einem Panel; und
einer Trägerstruktur mit einem Raum, der angepasst ist, um den Kopf der Befestigungsvorrichtung und das elastomere Element aufzunehmen.

## Revendications

1. Dispositif de fixation, comprenant :
un élément de fixation allongé,
une tête couplée à une extrémité de l'élément de fixation allongé, **caractérisé par** :
un élément élastomère couplé à une surface de la tête sensiblement opposée à l'élément de fixation allongé.

2. Dispositif de fixation selon la revendication 1, dans lequel une section transversale horizontale de la tête a :
une forme globalement rectangulaire dans laquelle deux angles opposés sont arrondis ; ou
une forme de carré, de rectangle, de cercle, d'ellipse, d'octogone ou de parallélogramme.

3. Dispositif de fixation selon la revendication 1, dans lequel l'élément élastomère est un ressort ou comprend du caoutchouc.

4. Dispositif de fixation selon la revendication 1, dans lequel :
l'élément élastomère est adapté de façon à créer un frottement suffisant contre une surface opposée pour empêcher le dispositif de fixation de glisser le long de la surface opposée ; et/ou
l'élément élastomère est configuré de façon à avoir un coefficient de frottement d'environ au moins 1 contre une surface opposée, lorsque ledit élément élastomère est sous sa forme non comprimée.

5. Dispositif de fixation selon la revendication 1, dans lequel l'élément élastomère comporte un axe longitudinal qui s'aligne avec un axe longitudinal de l'élément de fixation allongé.

6. Dispositif de fixation selon la revendication 1, comprenant de plus des ergots pour empêcher le dispositif de fixation de tourner dans une direction indésirable.

7. Procédé de fixation d'un dispositif sur une structure de support, le procédé comprenant :
la disposition d'un boulon qui comprend :
un élément de fixation allongé,
une tête couplée à une première extrémité de l'élément de fixation allongé, et
un élément élastomère couplé à une surface de la tête sensiblement opposée à l'élément de fixation allongé, et
l'insertion du boulon dans un espace de la structure de support, de telle sorte que l'élément élastomère comprime une surface de la structure de support et exerce une force contre celle-ci.

8. Procédé selon la revendication 7, dans lequel :
l'élément élastomère produit un frottement suffisant pour empêcher la tête de tomber hors de l'espace ; et/ou
l'élément élastomère a un coefficient de frottement d'environ au moins 1 contre la surface de la structure de support, lorsque ledit élément élastomère est sous sa forme non comprimée.

9. Procédé selon la revendication 7, comprenant de plus :
la disposition d'un panneau sur la structure de support, de telle sorte que le dispositif de fixation fasse saillie à travers un trou dans le panneau, et
le serrage d'un écrou autour du dispositif de fixation de façon à fixer le panneau sur la structure de support.

10. Procédé selon la revendication 7, comprenant de plus :
la disposition d'un panneau sur la structure de support,
la disposition d'un élément de serrage sur le boulon, de telle sorte qu'au moins une partie de l'élément de serrage recouvre le panneau, et
le serrage d'un écrou autour du dispositif de fixation de façon à fixer le panneau sur la structure de support.

11. Procédé selon la revendication 9 ou 10, dans lequel le panneau est un panneau solaire.

12. Procédé selon la revendication 7, dans lequel la structure de support comprend une partie supérieure et une partie inférieure, la partie supérieure comprenant des mâchoires opposées supérieures qui forment les contours d'une fente à travers laquelle peut faire saillie l'élément de fixation allongé, et ledit espace se trouvant entre la partie supérieure et la partie inférieure.

13. Procédé selon la revendication 12, dans lequel la structure de support est un rail.

14. Procédé selon la revendication 12, dans lequel l'élément élastomère pousse la tête contre ladite partie supérieure et appuie directement contre ladite partie inférieure.

15. Système de serrage à montage par le dessus, comprenant :
le dispositif de fixation comprenant un élément de fixation allongé, une tête couplée à une extrémité de l'élément de fixation allongé, et un élément élastomère couplé à une surface de la tête sensiblement opposée à l'élément de fixation allongé,
un panneau, et
une structure de support comprenant un espace adapté de façon à accepter la tête du dispositif de fixation et l'élément élastomère.
